# EUROPEAN PATENT APPLICATION

(11) **EP 1 900 290 A1**
(43) Date of publication of application: **19.03.2008**
(21) Application number: 07114349.9
(22) Date of filing: 14.08.2007
(51) Int. Cl.: A23L 1/10, A21D 2/14

(54) **Wheat grains and/or resulting flours disinfection, discoloration and cleaning before, during or after milling**

(30) Priority: 15.08.2006 AR P060103555; 02.08.2007 AR P070103407
(71) Applicant: Porro, Hugo Nestor, 7600 Mar del Plata, Buenos Aires (AR); Viera, Daniel Froilan, (1814) Cañuelas, Buenos Aires (AR)
(72) Inventor: PORRO, Hugo Nestor, (7600), MAR DEL PLATA, BUENOS AIRES (AR)
(74) Representative: Hubert, Philippe

(57) **Abstract**

A cleaning, discoloration and disinfection procedure for wheat grain and/or resulting flours thereof, which comprises application onto said wheat grain before, during or after milling thereof, according to the traditional sifting and grinding mode of each milling plant, and/or to flours thereof, of at least one adequate organic or food grade acid in mixture with cleaning or wetting water thereof in a proportion comprised from 2% to 25% acid with respect to water to be used.

## Description

### TECHNICAL FIELD OF THE INVENTION

### STATE OF THE ART AND PROBLEMS TO BE SOLVED

At present, the wheat milling industry is going through a situation which significantly affects its profitability, due to the following scenario, it not being able to find a solution through traditional methods.

Mills need to generate benefits in order to assure their corporative existence. Despite the fact that mills should satisfy their clients by regularly offering quality flours, they also need to reduce flour elaboration costs without affecting quality thereof.

At present, wheat producers prefer a higher profitability through the yield per hectare than through wheat segregation and/or improvement of the quality thereof.

Due to the above, the milling industry finds it difficult to obtain a raw material capable of satisfying the ever increasing demands of the producers of farinaceous products.

The international increase of wheat price, wherein exports, in spite of the present retentions, are strong competitors at the time of selling crops; as a consequence the milling industrialist is unable to offer a lower price than that offered by the formers, which will then sell crops to a better market.

Increase of flours quality requirements by industrial buyers, such as: 1) To be able to satisfy end consumers, which among other factors demand a whiter color, free of pekar, as this is considered by final client as a higher quality flour; and 2) to receive raw material with the lowest possible count of mites, fungi, spores and bacteria in order to enhance products quality and extend their life.

All of the above, and surely more, imply that a better profitability may only be attained through the search of other variables, mainly internal ones, such as costs reduction, yield increase, quality increase and further, an increase of milled flours prices.

Cleaning and conditioning of milled wheat grain directly affects the resulting flour price. Sold wheat includes dry matter, water and impurities.

Impurities are considered negative elements with a certain difficulty to be eliminated, and with a variable recovery value. Thus, whereas mineral impurities as dust have no value, vegetal impurities may have a value which approximates that of milling by-products.

Within the cleaning step a percentage of waste is obtained which elimination directly affects the purchased wheat volume (state of the art facts may be found in milling industry manuals and literature).

As regards organic acids in foodstuff, use thereof is known for fish, bivalves (pianguas) and/or pickles; their utilization in flour and wheat is not known.

Patent application WO2004056203 (Purac Biochem B.V.) describes controlled acidification of food products by means of lactic acid or glycolic acid derivatives or oligomers.

As regards panification products, the only known fact consists of the action against bread filamentation by adding vinegar to bread dough.

### Solved problem:

To obtain a higher profitability by acting differently on wheat cleaning and disinfection before milling as in the inventive process which will be thoroughly explained in the specifications bellow. This novel process produces the following end results:
I. A better color of the flour obtained, which types 00 - 000 - 0000 and 00000 Real are whiter
II. An increase of all of the 00 - 000 - 0000 and 00000 Real flours yields
III. A modification of typical yield percentages among all of the 00 - 000 - 0000 and 00000 Real flours
IV. Color improvement and lack of impurities in obtained flours
V. An improvement of nutrients number of obtained flour, which being real and verifiable may be included in nutritional data of packages
VI. A decrease of all kind of bacteriological counts in obtained flours
VII. A decrease of all kind of bacteriological counts in obtained by-products.

### BRIEF DESCRIPTION OF THE INVENTION

The present invention relates to a procedure for the disinfection, discoloring and cleaning of wheat grains, and/or of resulting flours, before, during or after milling thereof.

When said procedure is carried out before milling of wheat grains, the traditional activities of milling plants are not affected.

Said traditional activities consist of dry sieving of impurities from the wheat to be milled.

The process according to the invention adds to wheat cleaning and/or humectation water adequate organic acids, preferably food grade acetic acid, with the following purposes: disinfection and sanitization of clean wheat due to whitening of this wheat hull by organic acids present in the cleaning water, if any, and in the pre-milling humectation water, extraction variables being thence modified.

More specifically, the present invention refers to a cleaning, discoloration and disinfection of wheat grains and/or resulting flours thereof, which procedure comprises the application to wheat grain, before, during or after milling, according to the traditional sifting and grinding modes of each milling plant, and/or to flours thereof, of at least one adequate organic or food grade acid mixed with the cleaning or moisturizing water thereof in a proportion from 2% to 25% acid with respect to water to be used.

Previous to the milling process of cereal, impurities thereof should be eliminated by means of apparatuses. To such end an aspirator is used, that is, an apparatus that, by means of an air current from a blower separates lighter particles, such as dust and aborted or parasited grains. The trieur or selecting machine separates grains according to their size; this machine consists of a rotary barrel provided with blades and a series of different size holes communicated with channels which separate the so selected grains. Operation thereof is supplemented by shaking sieves and magnetic separators.

Some mills also include wheat flushing with water with the purpose of settling heavy impurities (stones), this is followed by centrifugation and drying with hot air in order to "condition" wheat at the humidity required for milling.

Water hardens bran layer and softens endosperm, facilitating the subsequent separation thereof. Hulling machines eliminate external cuticle of grain, the more coarse the operation the more whole the desired flour will be.

Embryo is also separated in this stage because its tissue is rich in fat and thence it is prone to staling flour. Scourers separate those particles already loosened by hulling machines and clean grain surface.

Since this moment, when the clean grain is beginning to be subject to the process of its washing and/or wetting for the first grinding, according to the mill diagram and until the second correcting wetting, if any, there commences the best time for the application of the already mentioned organic acids in order to disinfect and bleach hulls thereof.

In order to attain an integral distribution of these the best thing to do is to mix same with the water incorporated by means of a metering device or in a special tank, taking organic acids from 99% to the desired acidity, which is calculated, according to the grains to be treated, as 5-12% acidity measured in acetic acid. As it is a low dose and the residue on the by-product is not high, grains do not need further rinsing.

It is to be remarked that if so desired it can be done after the desired bleaching is attained.

The solution comprised of water and the above mentioned acids will act disinfecting wheat hulls, this being an important factor as it will surely improve the sales price of the bran hull and it will also be free of fungi, spores and bacteria.

Said solution will also bleach the outer side of the hull (which will turn into a light golden color) and through a logical humidity transmission, it will penetrate the grain and bleach the inner side of the hull. This will later allow a deeper scraping of hull than with the traditional method, a larger quantity of flour and lower quantity of by-products being obtained.

Wheat exterior exhibits a groove or slot which is sometimes difficult to scour, it being whiter and more aseptic, though, it will not add impurities to extracted flours.

The acid solution will continue acting and through the process advance itself, it will bleach and disinfect with much more intensity the area separating the internal hull portion from flour in the exterior.

This discoloring action will generate from then on more whiteness for all of the flours produced by the milling process.

This is due to the fact that flour nearer the wheat grain hull will be considerably white and will not contaminate with a darker color those flours which are nearer the grain center, further preventing contamination with bacteria, fungi or spores which hulls might pass to such flours.

According to the volume of solution used, which will vary as per the humidity required by the grain to be milled, the solution may approach the center of the grain. As the solution advances, it will eliminate mites, disinfect and bleach resulting flours and the result will be extraction percentages of flours exhibiting more zeros, particularly 0000 and 00000 Real, without affecting quality, specially darker color and with pekar, and the ashes percentages of 000 flours. It may also be applied on sprouted grains, as well as those infested by fusariosis and/or showing a higher ash concentration.

In fact, the inventive process substantially modifies and improves:
1) Quality of resulting flours;
2) Extraction rates;
3) Extraction percentages which enable the obtention of flours with better sales price;
4) Bacteriological count;
5) Whiter flours.

The present invention intends to protect at least one of the following features:
1. A cleaning, discoloration and disinfection procedure for wheat grains and/or flours thereof, characterized in that said procedure comprises application to wheat grain, before, during or after milling thereof, according to the traditional sifting and grinding modes of each milling plant, and/or to flours thereof, of at least one adequate organic or food grade acid in mixture with the cleaning or wetting water thereof in a proportion of 2%-25% acid with respect to water to be employed.
2. A procedure according to claim 1, characterized in that it comprises the application on pre-milled wheat grain, according to the traditional sifting and grinding modes of each milling plant, of at least one adequate organic or food grade acid in mixture with the cleaning or wetting water thereof in a proportion of 2%-25% acid with respect to water to be employed.
3. A procedure according to claims 1 and 2, characterized in that it comprises application to wheat grain since its harvest, post-harvest, pre-ensilage, silage, post-ensilage, bagging, unbagging, drying, and/or transport, before entering thereof into the mill for milling thereof, of at least one organic or food grade acid mixed with cleaning or wetting water thererof in a proportion from 2-25% acid with respect to water to be used.
4. A procedure according to any of the preceding claims, characterized in that it comprises application onto said wheat grain, since its harvest, post-harvest, pre-ensilage, silage, post-ensilage, bagging, unbagging, drying, and/or transport, before entering thereof into the mill for milling thereof, of diluted food grade acetic acid known as "alcohol vinegar or white vinegar" mixed with cleaning or wetting water thereof in a proportion from 2-25% acid with respect to water to be used.
5. A procedure according to claim 1, characterized in that it comprises application onto said wheat grain, since its harvest, post-harvest, pre-ensilage, silage, post-ensilage, bagging, unbagging, drying, and/or transport before entering thereof into the mill for milling thereof, of diluted food grade acetic acid known as "alcohol vinegar or white vinegar" mixed with lactic acid and cleaning or wetting water thereof in a proportion from 2-25% acid with respect to water to be used.
6. A procedure according to claim 1, characterized in that it comprises application onto said wheat grain, since its harvest, post-harvest, pre-ensilage, silage, post-ensilage, bagging, unbagging, drying, and/or transport, before entering thereof into the mill for milling thereof, of lactic acid mixed with cleaning or wetting water thereof in a proportion from 2-25% acid with respect to water to be used.
7. A procedure according to claim 1, characterized in that it comprises application onto said wheat grain, since its harvest, post-harvest, pre-ensilage, silage, post-ensilage, bagging, unbagging, drying, and/or transport, before entering thereof into the mill for milling thereof, of diluted food grade acetic acid known as "alcohol vinegar or white vinegar" mixed with sodium or potassium metabisulfite and cleaning or wetting water thereof in a proportion from 2-25% acid with respect to water to be used.
8. A procedure according to claim 1, characterized in that it comprises application onto said wheat grain, since its harvest, post-harvest, pre-ensilage, silage, post-ensilage, bagging, unbagging, drying, and/or transport, before entering thereof into the mill for milling thereof, of diluted food grade acetic acid known as "alcohol vinegar or white vinegar" and lactic acid, jointly or independently, and combined with cleaning or wetting water thereof in a proportion from 2-25% acid with respect to water to be used.
9. A procedure according to claim 1, characterized in that it comprises application onto said wheat grain, before milling thereof according to the traditional sifting and grinding mode of each milling plant, of at least one adequate organic or food grade acid in mixture with cleaning or wetting water thereof in a proportion from 2-25% acid with respect to water to be used, causing bleaching of wheat grain hull.
10. A procedure according to claim 1, characterized in that it comprises application onto said wheat grain before milling thereof, according to the traditional sifting and grinding mode of each milling plant, of at least one adequate organic or food grade acid in mixture with cleaning or wetting water thereof in a proportion from 2-25% acid with respect to water to be used, causing bleaching of flour next to the wheat grain hull.
11. A procedure according to claim 1, characterized in that it comprises application onto said flour wheat grain, after milling thereof, by means of vapor, spraying or any other system of at least one adequate organic or food grade acid in mixture with cleaning or wetting water thereof in a proportion from 2-25% acid with respect to water to be used, causing bleaching of wheat flour.
12. A procedure according to claim 1, characterized in that it comprises application onto said wheat grain flour, after milling thereof, by means of vapor, spraying or any other system, of at least one adequate organic or food grade acid in mixture with cleaning or wetting water thereof in a proportion from 2-25% acid with respect to water to be used, causing bleaching of wheat flour and wheat hull for the elaboration of organic food.
13. A procedure according to claim 1, characterized in that it comprises application onto said wheat grain, before, during or after milling thereof, according to the traditional sifting and grinding mode of each milling plant, and/or to flours thereof, of at least one adequate organic or food grade acid and ordinary table salt in mixture with cleaning or wetting water thereof, wherein said table salt is present in a proportion comprised from 3% to 25%, preferably from 5% to 10% sodium, with respect to water to be used.
14. A procedure according to any of the preceding claims, characterized in that there are also applied malic and/or citric acid.

### DETAILED DESCRIPTION OF THE INVENTION

The invention relates to a process for the disinfection, discoloration and cleaning of wheat grains and/or flours resulting therefrom before, during or after milling thereof.

When the procedure is carried out before wheat grains are milled, traditional operation of milling plants is not affected.

Said traditional operation consists of the dry sieving of impurities from the wheat which is to be milled.

This novel process according to the invention adds to wheat cleaning and/or humectation water adequate organic acids, preferably food grade acetic acid, with the following purposes:

Disinfection and sanitization of clean wheat via hull bleaching by means of organic acids present in flushing water, if any, and in the humectation water applied before milling, wherein extraction variables are thence modified.

The basis for the utilization of the organic acid known as food grade acetic acid in the above process comprises:
1) It is absolutely innocuous as regards consumer's health.
2) It is used in higher doses in other foodstuff, as pickles and vinegar for salads and other foods of daily consumption, for all kind of people and ages;
3) It does not transmit or leave strange and/or undesirable taste;
4) It does not affect preservatives used for milled flours;
5) It does not affect other ingredients which will be further added to kneaded flours;
6) It does not affect fermentation carried out with these flours;
7) It does not affect added flavors and/or flavorings;
8) It does not alter food, minimal acidity thereof aids in the duration of food life and preservatives act synergically organic acid.

Acetic acid and salts thereof are very efficient as acidifiers and preservatives and are widely used as such. Only *Acetobacter sp.,* certain lactic bacteria and some molds and yeasts exhibit certain resistance to this compound.

It has been demonstrated that the presence of 1-2% non-dissociated acetic acid in meat, fish or vegetables, frequently inhibits or kills all microorganisms.

Growth of most bacteria that originate toxic infections and sporulant ones is inhibited by concentrations of 0.1%, and in the case of mycotoxigenic molds the concentration amounts to 0.3%.

Due to their solubility, flavor and low toxicity, short chain organic acids such as the acetic acid may be used as preservatives or acidifiers.

Organic acids are mainly used as mycostatic agents. However, at high concentrations, such acids are very efficient against several microorganisms (including viruses).

The utilization of organic acids is generally compatible with the use of other preservatives or preservation systems and, in fact, many combinations exhibit a synergical effect. For example, they show a higher efficiency as microbial inhibitors as the storage temperature decreases and higher efficiency as microbicides as temperature rises.

Most countries publish maximum allowed levels for different foods. In the case of some organic acids such as the acetic acid, allowed maximum concentrations are not regulated. It is to be remarked that the possible residual which might remain in milled flours is minimum as compared to the recommended value.

According to the CAA 260 the (glacial) acetic acid is classified under Preservatives and Acidity Regulators. Its maximum dose is limited by the Good Manufacturing Practices, that is to say, it is left to the criterion and responsibility of the manufacturer. In order for an organic acid to be authorized as preservative, it must be previously shown that it represents a direct or indirect beneficial effect for consumers. That is to say, it should maintain the nutritive value, increase supply thereof, improve its domestic life and substantially reduce its cost or otherwise result more convenient for consumers.

The E 260 acetic acid, in its vinegar form, consists essentially of a dilution of this acid in water, plus wine aromas and those produced by acidification. A large proportion of the presently used product is obtained by chemical synthesis. It is relatively efficient as preservative, except for a specific application in bakery and confectionery, i.e. avoidance of an alteration known as "ropy bread".

Said acid is also efficient against certain molds. The preserving action of acetic acid is an added effect in the case of those products which acidity or typical aroma is desirable or characteristic, as in pickles, brine and savouries.

Acetate is an essential actor in many metabolic reactions of the organism. When ingested with the diet it is absorbed and used for energetic purposes or in the creation of organic constituents.

In conclusion, acetic acids and acetates are totally innocuous products at the concentrations used in food.

Thus, it is used without any inconvenient or questioning whatsoever in the elaboration of pickles in acid covering medium wherein acidity of the later should not be less than 2 % calculated as acetic acid.

In order to attain a correct sanitization, disinfection and bleaching of clean wheat to be milled, final concentration of organic acid (including water used and the wheat to be milled) should be from a minimum 0.15% to a maximum 0.36%.

This low percentage represents a fifth of the required percentage of acetic acid used, for instance, in the elaboration of a popular food such as a vinegar pickle.

On the other hand, acidity percentage as measured in acetic acid exhibited by most alcohol vinegars is similar to that to be used in the process previous to wheat milling, and so use of diluted acetic acid may be replaced by alcohol vinegar in concentrations comprised from 4% to 12%, as measured in acetic acid.

Also, the minimum presence of preservative 223, sodium metabisulfite, at concentrations lower than 0.02% as regards vinegar, will act synergically improving wheat hull bleaching process.

Accordingly, an embodiment of the invention consists of the use in cereal milling of this form of diluted acetic acid known as "alcohol vinegar or white vinegar" and of authorized preservatives thereof: 224 potassium metabisulfite; 223 sodium metabisulfite; 222 Sodium bisulfite; 221 sodium sulfite and 220 dioxide sulphur.

Later, this already low volume of metabisulfite or other approved preservatives shall be remarkably reduced when incorporated to a clean wheat ton.

The mixture of acetic acid and lactic acid produces a synergy which boosts both organic acids, and thus another embodiment of the invention consists of the application to cereals, in the described process, of the combination of these two acids, jointly or independently. Preferably, lactic acid is present in a proportion comprised from 2% to 25% acid based on the water to be used.

Another variant is to add ordinary table salt to the organic acid(s) employed. This incorporation of a new element, 100% natural, enhances acids action when water contains table salt in a proportion from 3% to 25%, preferably from 5% to 10% sodium based on the quantity of water used.

A further variant is to add malic and/or citric acid.

Cereals preservation: Seeds are composed of living cells and during storage thereof breathing continues with utilization of oxygen and formation of CO₂ and heat. At low temperature levels, respiration rates are low, but all grains have a critical humidity level above which respiration rates quickly increase, producing heating of grain and the resulting damage, wherein they dry before storage.

In the case of wheat, critical level is comprised from 14 to 15% humidity, at which point fungi present on grains and bran begin growing. Breathing thereof is added to that of seeds and CO₂ and heat production is accelerated, and thus grains heating. Application of above mentioned acids during grain ensilage will act the same way as before milling of cleaned and scoured wheat. The only difference will be that hull bleaching will not be so intense.

Accordingly, an embodiment of the invention is to use, during ensilage or in any moment before entering into mill, a combination of these two acids, together or otherwise, or alcohol or white vinegar and preservatives thereof.

During the experiences carried out:
1) Flours acidity degree remained unchanged;
2) Test dough pieces remained within the excellent quality parameters of the bakery, noodles, confectionery industries and/or other traditional uses.

Further:
1) The resulting product is totally apt;
2) The advantage of the process is that it can be carried out in the whole mill production or in separated batches, as the solution incorporation is handled from a water dosing device in order to wet and/or flush the wheat to be milled.
3) 99% food grade organic acid may be incorporated to the water dropwise from a dosing device or into a tank containing water and the corresponding acid in the above indicated proportions.

### Tests

The first test consisted of taking small quantities of flours from different wheats and immerse all of them in liquids for 1 minute, controls with natural water and test samples in different acidulated waters of different acidities and several organic acids.

Flours treated only with water were significantly darker as compared to their color when dry. And the higher the extraction obtained upon milling, the browner they looked.

All of the samples that were treated with different types of acids considerably improved their whiteness. The following exhibited the best results:

| Test A 001 | |
|---|---|
| CONTROL | |
| **Wheat flour** | **OOO** |
| **Water added** | **natural without aggregates** |
| **Acids** | **None** |
| Result | Darker color |
| Pekar | Very remarkable |
| Aspect, Immediate | Dark |
| Aspect, 24 - 36 hs | Darker than immediate aspect |
| Aspect, 10 days | Darker than that at 24 - 36 hours |
| Aroma, immediate | Neutral |
| Aroma, 24 - 36 hs | Neutral |
| Aroma, 1 week | Neutral |
| Flavor | N/A |
| Fungi | NO |
| Mites | NO |

| Test A 002 | |
|---|---|
| **Wheat flour** | **000** |
| **Water added** | **Acidulated** |
| **Acids added** | **5% acetic in water** |
| Result | Color clearer than control |
| Pekar | Imperceptible |
| Aspect, immediate | Whiter |
| Aspect, 24 - 36 hs | Whiter than immediate aspect |
| Aspect, 10 days | Whiter than at 24 - 36 hours |
| Aroma, immediate | Slightly acid |
| Aroma, 24 - 36 hs | Minimum acid |
| Aroma, 1 week | Neutral |
| Flavor | N/A |
| Fungi | NO |
| Mites | NO |

| Test A 003 | |
|---|---|
| **Wheat flour** | **OOO** |
| **Water added** | **Acidulated** |
| **Acid Added** | **2% acetic and 2% lactic Total AC 4%** |
| Result | Color clearer than that of control |
| Result | Same color as acetic acid |
| Pekar | Imperceptible |
| Aspect, immediate | Whiter |
| Aspect, 24 - 36 hs | Whiter than immediate result |
| | Very white, much than the 24 - 36 hours |
| Aspect, 10 days | result |
| Aroma, immediate | Slightly acid |
| Aroma, 24 - 36 hs | Barely acid |
| Aroma, 1 week | Neutral |
| Flavor | N/A |
| Fungi | NO |
| Mites | NO |

| Test A 004 | |
|---|---|
| **Flour** | **OOO** |
| **Water** | **Acidulated with 10% glacial acetic** |
| Result | Color clearer than control |
| Result | Color clearer than 5% acetic |
| Pekar | Almost imperceptible |
| Aspect, immediate | Very white |
| Aspect, 24 - 36 hs | Whiter |
| Aspect, 10 days | Whitest |
| Aroma, immediate | Strong |
| Aroma, 24 - 36 hs | Regular |
| Aroma, 1 week | Neutral |
| Flavor | N/A |
| Fungi | NO |
| Mites | NO |

After the successful results of the experiments, tests were carried out, this time with clean wheat seeds, before milling thereof. Several of these follow.

In the first test of this series, A 005, carried out on 100 g of wheat and established as control, clean wheat was wetted with the average humidity with which millers typically mill cereals.

| Test A 005 - Control | | | % on dry wheat | % on wet wheat |
|---|---|---|---|---|
| | Dry Wheat | 100,000 g | 100% | 97.561% |
| 2,5% | Distribution system water | 2,500 g | 2.500% | 2.439% |
| | Ac 260 acetic on | | | |
| 0,0% | Water | - g | 0.000% | 0.000% |
| | AC 270 Lactic on | | | |
| 0,0% | Water | - g | 0.000% | 0.000% |
| 0,0% | Ac Vinegar on wheat | - g | 0.000% | 0.000% |
| | Wet wheat | 102.500 g | 102.500% | 100% |
| | Humidity incorporated to | | | |
| | wheat | 2.500 g | 2.500% | 2.439% |

Results of this test show that wheat, as expected, remained much the same as wheat milled by mills. No fungi or spores were generated by the minimum quantity of water added.

| Test A 005 Control | | | |
|---|---|---|---|
| **Seeds** | | | **Bread wheat** |
| **Water added** | **2.50%** | | **From distribution system** |
| **99% acetic acid on water** | **0%** | NO | Glacial Atanor (TM) |
| Lactic acid in water | **0%** | NO | Merck (TM) |
| 5% alcohol vinegar | **0%** | NO | Inchaurraga (TM) |
| | | | color very similar to dry |
| Result | | | wheat |
| Aspect, inmediate | | | No variation |
| Aspect, 24 - 36 hs | | | No variation |
| Aspect, 10 days | | | No variation |
| Aroma, immediate | | | No variation |
| Aroma, 24 - 36 hs | | | No variation |
| Aroma, 1 week | | | Neutral |
| | | | |
| Aroma, 15 days | | | Neutral |
| Flavor | | | Similar to dry wheat |
| Fungi 30 days | | NO | |
| Mites 30 days | | NO | |
| Mites 60 days | | NO | |
| Mites 90 days | | NO | |
| Mites 300 days | | YES | |

Results of the first of the tests with organic acid, in this case only food grade AC 260 glacial acetic acid, show a better color of hull and seed interior, no mites were present as time elapsed.

This world discovery is due to the fact that wheat, slightly acidified, inhibits growth of insects and larvae of any kind.

Employment of this kind of highly pure acetic acid, instead of those of low quality, is because food grade glacial type is completely free of heavy metals -which human beings are unable to metabolize.

| | | | | % dry | |
|---|---|---|---|---|---|
| | Test A 006 | | | wheat | % wet wheat |
| | Clean wheat | 100.000 | grams | 100% | 97.442% |
| 2.5% | Water | 2.500 | grams | 2.500% | 2.436% |
| 5.0% | Ac 260 Acetic | 0.125 | grams | 0.125% | 0.122% |
| 0.0% | AC 270 Lactic | - | grams | 0.000% | 0.122% |
| 0.0% | Ac Vinegar | - | grams | 0.000% | 0.000% |
| | Wet wheat | 102.625 | grams | 102.625% | 100% |
| | Humidity added to | | | | |
| | wheat | 2.625 | grams | 2.625% | 2.558% |

| Test A 006 | | | |
|---|---|---|---|
| **Seeds** | | | **Bread wheat** |
| **Water added** | **2.50%** | | **Distribution system** |
| **99% acetic acid in water** | **5%** | YES | Atanor (TM) glacial |
| Lactic acid in water | **0%** | NO | Merck (TM) |
| 5% alcohol vinegar | **0%** | NO | Marca Inchaurraga |
| | | | Improvement of color and |
| Visible result | | | mite |
| Immediate aspect, hull | | | Clearer wheat |
| Inmmediate aspect, internal | | | Whiter |
| Aspect, 24 - 36 hs | | | Whiter |
| Aspect, 10 days | | | Whiter |
| Aroma, immediate | | | Slightly pungent |
| Aroma, 24 - 36 hs | | | Low, acid |
| Aroma, 1 week | | | Almost neutral |
| Aroma, 15 days | | | Neutral |
| Flavor | | | Similar to dry wheat |
| Fungi, 30 days | | NO | |
| Mites, 30 days | | NO | |
| Mites, 60 days | | NO | |
| Mites, 90 days | | NO | |
| Mites, 300 days | | NO | |

When acting together, acetic and lactic acids generate a rather interesting synergic effect. Their joint action enables the obtention of similar results even if their quantity is decreased about 20%. When these acids volume is decreased, there is a considerable reduction of the possibility of acids affecting P or L of wheat, modifying original characteristics of milled wheat. This is an ideal process for weak flours. "P" stands for "tenacity" (dough yield strength) and "L" stands for "extensibility" (dough extensibility), both of them being measured by means of the Chopin alveograph method.

| | | | | % | % |
|---|---|---|---|---|---|
| | Test A 007 | | | dry wheat | wet wheat |
| | Clean wheat | 100.000 | grams | 100% | 97.466% |
| 2.5% | Water | 2.500 | grams | 2.500% | 2.437% |
| 2.0% | Ac 260 Acetic | 0.050 | grams | 0.050% | 0.049% |
| 2.0% | AC 270 Lactic | 0.050 | grams | 0.050% | 0.049% |
| 0.0% | Ac Vinegar | 0.00 | grams | 0.000% | 0.000% |
| | Wet wheat | 102.600 | grams | 102.600% | 100% |
| | Humidity added | 2.600 | grams | 2.600% | 2.534% |

| Test A 007 | | | |
|---|---|---|---|
| **Seeds** | | | **Bread wheat** |
| **Water added** | **2,50%** | | **Distribution system** |
| **99% acetic acid in water** | **2,00%** | YES | Glacial Atanor (TM) |
| Lactic acid in water | **2,00%** | YES | Merck (TM) |
| 5% alcohol vinegar | **0%** | NO | Inchaurraga (TM) |
| | | | Visible improvement and |
| Result | | | lowers AC 20% |
| Immediate aspect, hull | | | Clearer wheat |
| Inmmediate aspect, internal | | | Same results as A 006 |
| Aspect, 24 - 36 hs | | | Same results as A 006 |
| Aspect, 10 days | | | Same results as A 006 |
| Aroma, immediate | | | Somewhat pungent |
| Aroma, 24 - 36 hs | | | Less acid than A 006 |
| Aroma, 1 week | | | Neutral |
| Aroma, 15 days | | | Neutral |
| Flavor | | | Neutral |
| Fungi, 30 days | | NO | |
| Mites, 30 days | | NO | |
| Mites, 60 days | | NO | |
| Mites, 90 days | | NO | |
| Mites,300 days | | NO | |

Two immersion tests were performed. The first of them, A 008, was carried out with domestic distribution system water. Humidity incorporated was calculated by wheat weight difference, namely 16% more. Remarkably, seeds were felt sticky and milling thereof was impossible. After 15 days wheat interior color exhibited an improvement; after some time it was full of fungi and a long time after it was infested with mite. As a test, the antithesis of what is required from a good milling was obtained.

| | | | | % dry | |
|---|---|---|---|---|---|
| | Test A 008 | | | wheat | % wet wheat |
| | Clean wheat | 100.000 | grams | 100% | 86.207% |
| 16.0% | Water | 16.000 | grams | 16.000% | 13.793% |
| 0.0% | Ac 260 Acetic | - | grams | 0.000% | 0.000% |
| 0.0% | AC 270 Acetic | - | grams | 0.000% | 0.000% |
| 0.0% | Ac Vinegar | - | grams | 0.000% | 0.000% |
| | Wet wheat | 116.000 | grams | 116.000% | 100% |
| | Humidity added | 16.000 | grams | 16.000% | 13.793% |

| Test A 008 - Maximum | | | |
|---|---|---|---|
| | | | **1 minute immersion in** |
| **Wheat** | | | **water** |
| **Water added** | **16.00%** | | **Distribution system** |
| **99% acetic acid in water** | **0.00%** | NO | Glacial Atanor (TM) |
| Lactic acid in water | **0.00%** | NO | Merck (TM) |
| 5% Alcohol vinegar | **0%** | NO | Inchaurraga (TM) |
| | | | Dark color due to hull |
| Result | | | wetness |
| Immediate aspect, hull | | | Stickier wheat |
| Internal aspect, 15 days | | | Non-apt |
| Aspect, | | | Whiter but inadequate for |
| 24 a 36 hs | | | milling |
| Aspect, 10 days | | | Non-apt |
| Aroma, immediate | | | Different from dry wheat |
| Aroma, 24 - 36 hs | | | Wet wheat |
| Aroma, 1 week | | | Walnut |
| Aroma, 15 days | | | Fungi |
| Flavor | | | Neutral |
| Fungi 30 days | | YES | |
| Mite, 30 days | | NO | |
| Mite, 60 days | | NO | |
| Mite, 90 days | | YES | Very few |
| Mite, 300 days | | YES | Many |

Test A009, which was similar in that wheat to be milled was immersed, was carried out with water acidulated with 5% AC 260 acetic. It did not absorb so much liquid; weight increase amounted to 12.5% more.

| | | | % dry | |
|---|---|---|---|---|
| Test A 009 | | | wheat | % wet wheat |
| Clean wheat | 100.000 | grams | 100% | 88.885% |
| 11.9% Water | 11.910 | grams | 11.910% | 10.586% |
| 5.0% Ac 260 Acetic | 0.596 | grams | 0.596% | 0.529% |
| 0.0% AC 270 Lactic | - | grams | 0,000% | 0.529% |
| 0.0% Ac Vinegar | - | grams | 0.000% | 0.000% |
| Wet wheat | 112.506 | grams | 112.506% | 100% |
| Added humidity | 12.506 | grams | 12.506% | 11.115% |

| Test A 009 (Maximum) | | | |
|---|---|---|---|
| | | | **1 minute immersion in** |
| **Wheat** | | | **acidulated water** |
| **Water added** | **12.50%** | | **Distribution system** |
| **99% acetic acid in water** | **5.00%** | YES | Glacial Atanor (TM) |
| Lactic acid in water | **0.00%** | NO | Merck (TM) |
| 5% Alcohol vinegar | **0%** | NO | Inchaurraga (TM) |
| Result | | | Quick bleaching of hull |
| | | | Not so sticky as that with 16% |
| Immediate aspect, hull | | | water |
| Internal aspect. 15 days | | | Very white |
| Aspect, | | | |
| 24 a 36 hs | | | Very white |
| Aspect, 10 days | | | Very white |
| Aroma, immediate | | | Acid |
| Aroma, 24 - 36 hs | | | Rather acid |
| Aroma, 1 week | | | Rather acid |
| Aroma, 15 days | | | Slightly acid |
| Flavor | | | Rather acid |
| Fungi 30 days | | NO | |
| Mite, 30 days | | NO | |
| Mite, 60 days | | NO | |
| Mite, 90 days | | NO | |
| Mite, 300 days | | NO | |

It was found that despite a remarkably higher wetting of wheat, when water was previously acidulated wheat could be milled, there being obtained higher yields of end flours.

Thus, in order to:
- attain a remarkable improvement of color;
- obtain an effective bactericide action;
- incorporate 100% more humidity to wheat in order to promote a higher yield of resulting flours
wheat is provided with higher humidity, provided water were acidulated with an aggregate of 4-5% organic AC, for example, and that in order to prevent strange aroma and flavor of end flour, one of the following should be selected:
- Option 1) to wet wheat and provide wheat with a rest period of at least 120 hours before milling thereof is performed
- Option 2) to wet wheat, let it rest during 24 hours and then mill; once different resulting flours are extracted, same should rest a minimum of 120 hours before they are sold.

| | Test A 009 | | | % trigo seco | % wet wheat |
|---|---|---|---|---|---|
| | Clean wheat | 100.000 | grams | 100% | 96.006% |
| 4.0% | Water | 4.000 | grams | 4.000% | 3.840% |
| 2.0% | Ac 260 Acetic | 0.080 | grams | 0.080% | 0.077% |
| 2.0% | AC 270 Lactic | 0.080 | grams | 0.080% | 0.077% |
| 0.0% | Ac Vinegar | - | grams | 0.000% | 0.000% |
| | Wet wheat | 104.160 | grams | 104.160% | 100% |
| | Added humidity | 4.160 | grams | 4.160% | 3.994% |

| Test A 009 (Maximum) | | | |
|---|---|---|---|
| | | | **1 minute immersion in** |
| **Wheat** | | | **acidulated water** |
| **Water added** | **12.50%** | | **Distribution system** |
| **99% acetic acid in water** | **5.00%** | YES | Glacial Atanor (TM) |
| Lactic acid in water | **0.00%** | NO | Merck (TM) |
| 5% Alcohol vinegar | **0%** | NO | Inchaurraga (TM) |
| Result | | | Quick bleaching of hull |
| Immediate aspect, hull | | | Non-sticky wheat, it can be milled |
| Internal aspect, 15 days | | | White |
| Aspect, 24 a 36 hs | | | White |
| Aspect, 10 days | | | Very white |
| Aroma, immediate | | | Acid |
| Aroma, 24 - 36 hs | | | Rather acid |
| Aroma, 1 week | | | Rather acid |
| Aroma, 15 days | | | Slightly acid |
| Flavor | | | Rather acid |
| Fungi 30 days | | NO | |
| Mite, 30 days | | NO | |
| Mite, 60 days | | NO | |
| Mite, 90 days | | NO | |
| Mite, 300 days | | NO | |

| Test A 010 | | | % dry wheat | % Wet wheat |
|---|---|---|---|---|
| Clean wheat | 100.000 | grams | 100% | 94.127% |
| 6.0% Water | 6.000 | grams | 6.000% | 5.648% |
| 2.0% Ac 260 Acetic | 0.120 | grams | 0.120% | 0,113% |
| 2.0% AC 270 Lactic | 0.120 | grams | 0.120% | 0.113% |
| 0.0% Ac Vinegar | - | grams | 0.000% | 0.000% |
| Wet wheat | 106.240 | grams | 106.240% | 100% |
| Added humidity | 6.240 | grams | 6.240% | 5.873% |

| Test A 010 | | | |
|---|---|---|---|
| | | | **1 minute immersion in** |
| **Wheat** | | | **acidulated water** |
| **Water added** | **6.00%** | | **Distribution system** |
| **99% acetic acid in water** | **2.00%** | YES | Glacial Atanor (TM) |
| Lactic acid in water | **2.00%** | YES | Merck (TM) |
| 5% Alcohol vinegar | **0%** | NO | Inchaurraga (TM) |
| Result | | | Quick bleaching of hull |
| Immediate aspect, hull | | | Bleached |
| Internal aspect, 15 days | | | Bleached |
| Aspect, 120 hs rest | | | White |
| Aspect, 10 days | | | Very white |
| Aroma, immediate | | | Acid |
| Aroma, 24 a 36 hs | | | Rather acid |
| Aspect, 120 hs rest | | | Slightly acid |
| Aroma, 15 days | | | Normal |
| Final flavor of flour | | | Normal |
| Fungi 30 days | | NO | |
| Mite, 30 days | | NO | |
| Mite, 60 days | | NO | |
| Mite, 90 days | | NO | |
| Mite, 300 days | | NO | |

### Test - Wheat, 10 tons

There were carried out two separate variables
1. Pre-milling rest: 120 hours
2. Pre-milling rest: 48 hours and post-milling rest: 120 hours

| Test A 012 | | | % dry wheat | % wet wheat |
|---|---|---|---|---|
| Clean wheat | 100.000 | grams | 100% | 96.006% |
| 4.0% Water | 4.000 | grams | 4.000% | 3.840% |
| 2.0% Ac 260 Acetic | 0.080 | grams | 0.080% | 0.077% |
| 2.0% AC 270 Lactic | 0.080 | grams | 0.080% | 0.077% |
| 0.0% Ac Vinegar | - | grams | 0.000% | 0.000% |
| Wet wheat | 104.160 | grams | 104.160% | 100% |
| Added humidity | 4.160 | grams | 4.160% | 3.994% |

| Test A 012 | | | |
|---|---|---|---|
| **Wheat** | | | **Milled at Industrial Mill** |
| **Water added** | **4.00%** | | **De Red domiciliaria** |
| **99% acetic acid in water** | **2.00%** | YES | Glacial Atanor (TM) |
| Lactic acid in water | **2.00%** | YES | Merck (TM) |
| 5% Alcohol vinegar | **0%** | NO | Inchaurraga |
| Result | | | Hull bleaching |
| Immediate aspect, hull | | | Slightly bleached |
| Internal aspect, 15 days | | | Slightly bleached |
| Aspect, 120 hs rest | | | Bleached |
| Aspect, 10 days | | | Good bleaching of flour |
| Aroma, immediate | | | Acid |
| Aroma, 24 - 36 hs | | | Rather acid |
| Aspect, 120 hs rest | | | Slightly acid |
| Aroma, 15 days | | | Normal |
| Final flavor of flour | | | Normal |
| Fungi 30 days | | NO | |
| Mite, 30 days | | NO | |
| Mite, 60 days | | NO | |
| Mite, 90 days | | NO | |
| | | | An assay was carried |
| Mite, 300 days | | NO | out |

The result of both tests with the same quantity of acidulated water and acidity a new variety of flour, non-existent up to this day, the 000, which color was similar to that of a 0000, and a 0000 whiter than traditional ones.

Flours already treated with the new process were subject to several industrial production tests, the most remarkable being the bakery and noodle industries. There follows the process relating to fresh and dry pasta:

| | | |
|---|---|---|
| | Treated 000 flour | 75 Kg |
| 38.00% | Water | 28.5 Kg |
| 0.10% | Beta-carotene dye solution | 0.075 Kg |
| | | 103.575 Kg |

All of the elaboration and drying was carried out as for traditional 0000 flours, 75 kg kneader and 600 mm wide rolling-mill, double gage/cutting machine, all ex Farina y Cerletti.

As an end result there was obtained a spaghetti virtually identical, as regards color, flavor, bite and palatability, to typically obtained ones. This exhibits the following advantages:
Pasta has higher fiber content
Pasta has higher content of vitamins and minerals
Pasta less prone to breakage, as treated 000 flour has more gluten, and accordingly, a better structure
Higher protein content implies a higher quality and a greater breaking and boiling strength.

The only difference regarding pasta made with treated flour was that in order to obtain a product which was identical to the traditional one, 20% more of beta-carotene was required.

Once product is elaborated, an improvement of color is observed. As regards the two treated flours, i.e. one with pre-milling treatment, the other subject to post-milling rest having been compared, panelists tasting and sampling color and aroma preferred that with pre-milling rest.

### Effect of direct immersion of acid treatment on flours

### Introduction:

Evaluation of the effect attained as bleaching agent of an acidulated solution on white flour (0000 and semolina) and dark flour (0,90% ashes) from an industrial mill.

### Materials and methods

- Flour: 0000 "A" (Humidity 14.2% ; ashes 0.47%, wet gluten 23.5% specks/spots 25)
- Flour 0000 "Real" (Humidity 14.2%, ashes 0.42%, wet gluten 23.0%, specks/spots 10)
- Semolina (Humidity 14.2%, ashes 0.42%, wet gluten 22.5%, specks/spots 20, particles size distribution of remainder on screen: 132 micron: 92%)
- Flour 0.90 (Humidity 14.5%, ashes 0.92%, wet gluten 27.5%)
Water: well, drinking water, residual chlorine <0.5 ppm.
Acetic acid: INS 260, food grade, trademark: Atanor
Lactic acid: INS 270, food grade, trademark: Merck
The experience scheme was as follows:
1) Solutions preparation
   Acidulated solution (pH 2): acetic acid (2%) + lactic acid (2%) W/V.
2) Modified Pekar test:
   a- Samples are taken and a petri plate cover is filled with same, surface is smoothed.
   b- The plate with flour is immersed into the acidulated solution or water -as may correspond- during 30 seconds.
   c- Let it dry and observe.

### Results and discussion

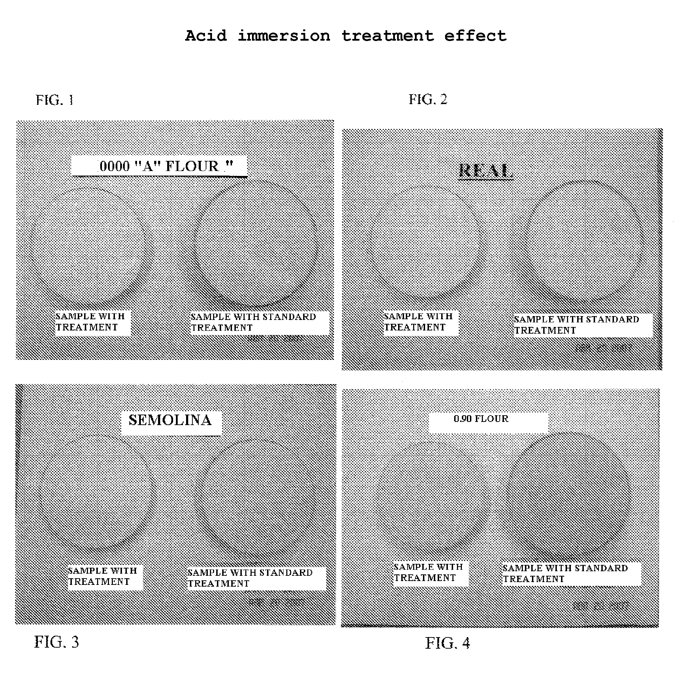

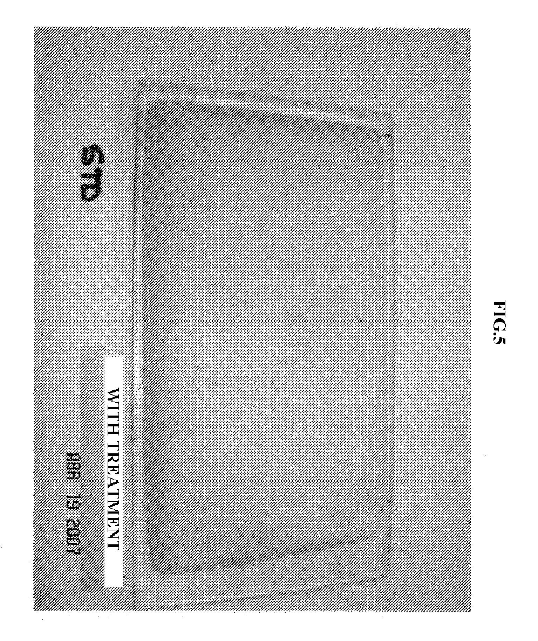

See Figures 1 to 4.

### Conclusion

Acidulated solution exhibited an important bleaching effect when compared to standard solution with all of the tested flours.

### Effect of the treatment with acid on wheat conditioning I (laboratory scale)

### Introduction

The purpose of this test was to check bleaching action of the acidulated water treatment (2% acetic acid + 2% lactic acid) for wheat conditioning. Milling was carried out with an Agromatic experimental mill which only produces low extraction flours; in order to attain a higher extraction one, by-product was sieved. Pekar tests were performed in order to check treatment effect.

### Materials and methods

Wheat: Bread wheat, grade 1, ashes: 1.70%, proteins: 11.0%; wet gluten: 25%.
Water: well, drinking water, residual chlorine <0,5 ppm.
Acetic acid: INS 260, food grade, trademark: Atanor
Lactic acid: .INS 270, food grade, trademark: Merck pH tapes, Merck

Experimental mill: Agromatic AQC model, Laboratory Mill, with 250 microns sieve.

The following is the experience scheme:
1) Solutions preparation
   Acidulated solution (pH 2): acetic acid (2%) + lactic acid (2%) w/v.
2) Conditioning: First, humidity was established (1 hour at 130°C), then, water or acidulated solution was added, as the case may be, in order to attain a final humidity of 16%. Same are left 24 hours in closed polyethylene bags to prevent evaporation and facilitate penetration of water or acidulated water, as the case may be.
3) Milling:
   After 24 hours there were milled with the Agromatic mill: first the untreated sample and then, after cleaning the equipment, the treated sample. There were obtained 40% of flours and fractions with hull (reject of 250 microns screen), they were sieved again through a 590 microns screen and there was obtained approx. 30% additional flours with higher ashes content (mixture of semola with hull particles) due to the particularity of the mill employed.
   All of the fractions were tested for pekar and pH (flour solution 10% w/v).
4) Samples observation as per Pekar test
   - Place on a small plate/glass/acrylic (approx. 5 cm width x 20 cm longitude) approximately 100 g of the sample(s) to be controlled and of the standard, one beside the other, in order to compare color and aspect uniformity.
   - Press sample(s) with another small plate/glass/acrylic in order to obtain a flat surface.
   - Immerse into a container with water, covering all of the surface, until all of the surface is wet. Withdraw, let it dry 5 minutes and observe.

### Results and discussion

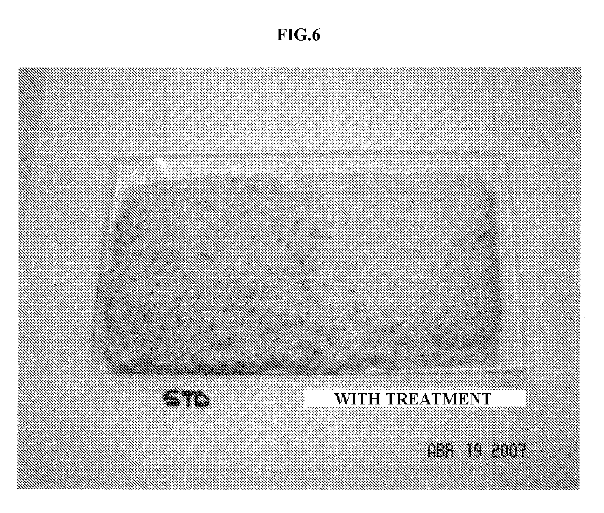

a) First extraction flours (see Fig. 5).
b) High extraction flours (hull + semola through 590 micron screen). See Fig. 6.

### Conclusion

Use of acidulated water for wheat conditioning has a bleaching effect on flours originated from the experimental milling.

### Effect of the treatment with acid on wheat conditioning II (laboratory scale)

### Introduction

The object of the test was to verify bleaching action of the treatment with acidulated water and commercial vinegar as regards wheat conditioning with different resting periods.

Milling was performed by means of a Buhler experimental mill which allows the obtention of flours or fractions which are similar to those obtained with an industrial mill.

Application tests on pasta were carried out in order to verify treatment effect.

### Materials and methods

Wheat: Bread wheat, grade 1, ashes: 1.68%, proteins: 11.0%; wet gluten: 25%.
Water: well, drinkable, residual chlorine: <0.5 ppm.
Acetic acid: INS 260, food grade, trademark: Atanor
Lactic acid: .INS 270, food grade, trademark: Merck
Commercial alcohol vinegar: Meollo trademark.
Eggs: Fresh
Salt: Ordinary table salt
Experimental mill: pneumatic Buhler MLU 202.

The following was the experience scheme:
1) Solutions preparation
Acidulated solution (pH 2): acetic acid (2.5%) + lactic acid (2.5%) W/V.
2) Conditioning:
First, humidity was established (1h at 130°C), water, acidulated solution or vinegar, as the case may be, was then added until a final humidity of 16% was attained (except with case 4, which was of 16.5%).
Homogenization was performed and samples 1 and 2 rested 24 hours and samples 3 and 4, 5 days in closed polyethylene bags in order to prevent evaporation and facilitate liquid penetration.

| Sample | Initial Humidity | Treatment | Resting days | End humidity |
|---|---|---|---|---|
| 1 | 12.3% | 5 kg wheat | 1 | 16.00% |
| | | 220 cc water | | |
| 2 | 12.3% | 5 kg wheat | 1 | 16.00% |
| | | 110 cc 2.5% v/v acetic | | |
| | | 110 cc 2.5% v/v lactic | | |
| 3 | 12.3% | 5 kg wheat | 5 | 16.00% |
| | | 110 cc 2.5% v/v acetic | | |
| | | 110 cc 2.5% v/v lactic | | |
| 4 | 12.3% | 5 kg wheat | 5 | 16.50% |
| | | 220 cc commercial vinegar | | |

3. Milling
After conditioning is accomplished, there were milled by means of the Buhler mill, first, the untreated sample (1) and then, after cleaning of the equipment between each new sample, treated samples were milled in the order: 2/3/4.
Each milling yield was established and a joint sample was prepared on fractions of each, and tests relating to ashes, gluten, farinogram and alveogram were performed.
4) Elaboration of fresh pasta
Color improvement verification was performed according to a fresh pasta elaboration test.
a) Ingredients

| | |
|---|---|
| Flour | 200 grs. |
| Eggs | 100 grs. |
| Salt | 4 grs. |

b) Procedure
- Mix flour with salt
- Add eggs
- Mix
- Pass through rolls in order to obtain an homogeneous 1 mm sheet (position 5 of the PASTALINDA® domestic pasta rolling mill).
- Fold three times
- Cut 1 cm ribbons
- Evaluate initial color and after 24 hs (store in refrigerator at a temperature of 0-5°C).

### Results and discussion

Milling produced flours with equivalent ashes content and modifications to dough characteristics were significant only in the case of samples bearing commercial vinegar with doses superior than those required for humectation thereof. (See table below).

| Sample | % ashessss | % gluten | | Farinogram | | Alveogram | |
|---|---|---|---|---|---|---|---|
| | | Wet | Dry | % Absorption | Stability (min) | W (10-4 joule) | P/L |
| 1 | 0.58 | 26.2 | 9.3 | 62.1 | 17.6 | 295 | 2.1 |
| 2 | 0.58 | 25.9 | 9.3 | 62.1 | 14.8 | 311 | 2.3 |
| 3 | 0.54 | 25.7 | 9.2 | 62.9 | 15.3 | 290 | 2.4 |
| 4 | 0.59 | 24.7 | 8.8 | 62 | 19.5 | 273 | 3.6 |

Anyway, when elaborating fresh pasta, no difficulties were encountered, even in the case with a high P/L relation (sample 4).

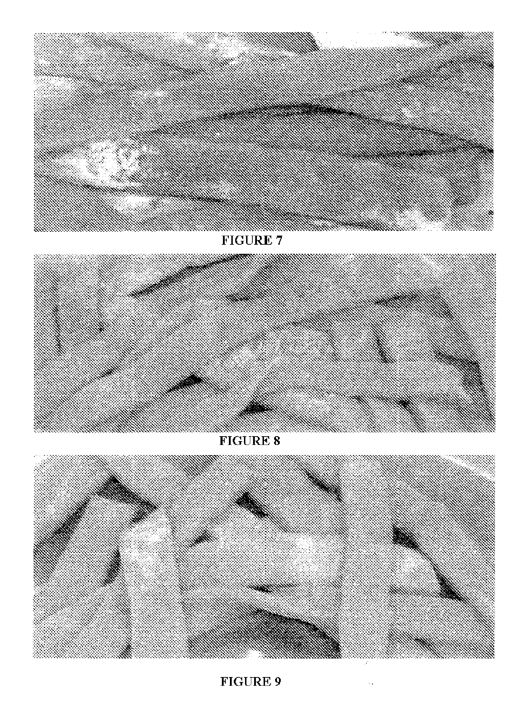

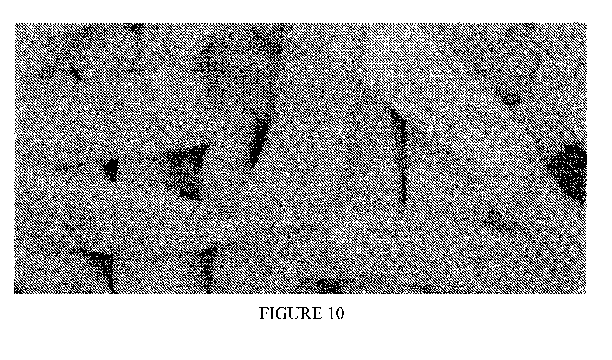

An improved color (whiter) was observed in treated samples (see Figures 7-10).

### Conclusion

Acidulated water utilization for wheat conditioning shows a bleaching effect on flours produced via experimental milling, which fact is remarkable as regards pasta elaboration.

### Effect of the treatment with acid on wheat conditioning III (industrial scale)

### Introduction

The object of the test was to verify the reduction of microbiologic counts upon treatment with acidulated water (2% acetic acid + 2% lactic acid) during wheat conditioning.

Milling was performed in an 200 ton/24 hs industrial mill, wherein non-treated and treated commercial flours were obtained.

### Materials and methods

Wheat: Bread wheat, grade 1, ashes: 1.75%, proteins: 12.3%; wet gluten: 28%.
C1F flour: ashes 0.45%
Bread flour: ashes 0.80%
Pasta flour: ashes 0.55%
Semolina: ashes 0.45%
Water: well, drinking water, residual chlorine <0.5 ppm.
Acetic acid: INS 260, food grade, trademark: Atanor
Lactic acid: .INS 270, food grade, trademark: Merck
Industrial Mill: pneumatic Buhler, capacity 24 TN/24 hs

### Experience scheme was as follows:

### 1) Solutions preparation:

Acidulated solution: (pH 2): acetic acid (2.5%) + lactic acid (2.5%) W/V.

A first 50% dilution was prepared in order to facilitate handling of acids.

Final preparation was done in the intermediate tank before dosing water into MYFA wetting equipment.

Correct preparation was checked through pH verifications.

### 2) Conditioning

MYFA wetting equipment added water or acidulated solution, as the case required, through a dosing pump, in order to achieve a final humidity of 16%.

Homogenization was performed with an intensive wetting thread and product was left to rest during 24 hs in the conditioning silo, previous to milling.
ST sample: water 24 hs
CA sample: acidulated water 24 hs

### 3) Milling:

After the conditioning period had elapsed there were milled with the Buhler mill first the non-treated sample (ST) and then treated wheat (CA) was milled during 4 hs (33 TN).

Samples were taken of all of the flours and of some of the runs on sterile containers, which samples were subsequently sent to an external laboratory in order to carry out the following determinations:
a) Microbiological
   Total count of aerobic mesophilic/fungi and yeast/Coliforms: Compendium of methods for the microbiological examination of foods, APHA (American Public Health).
b) pH (10% solution, W/V) AOAC 17^{th} Ed. 943.02 Methods of Analysis of AOAC International.
c) Acidity: IRAM (Argentine Institute for Materials Rationalization). Standard 15866.

| **Sample Identification** | **Sampling Point** | **Flour Type** | **Treatment type** |
|---|---|---|---|
| C1F ST | Cylinder C1F | C1F Flour | Water |
| C1F CA | Cylinder C1F | C1F Flour | Acid solution |
| Bread, ST | Scale 000 | Bakery Flour | Water |
| Bread, CA | Scale 000 | Bakery Flour | Acid solution |
| Pasta, ST | Scale 0000 | Pasta Flour | Water |
| Pasta, CA | Scale 0000 | Pasta Flour | Acid solution |
| Semolina, ST | Semolina outlet piping | Semolina | Water |
| Semolina, CA | Semolina outlet piping | Semolina | Acid solution |
| Wheat, ST | First grinding cylinder | Wheat | Water |
| Wheat, CA | First grinding cylinder | Wheat | Acid solution |

### Results and discussion

| Determinations: | Total aerobic mesophilic count UFC/g | Total coliform bacteria count NMP/g | Fungi and yeast count/g | pH sc. 10 % P/V | Acidity expressed in g Lactic acid/100 g / dry basis |
|---|---|---|---|---|---|
| /1: Flour (C1F-ST) | 7,000 | <3 | 700 | 6.06 (20.8°C) | 0.72 |
| /2: Harina (C1F-CA) | 300 | <3 | 300 | 5.54 (20.8°C) | 0.65 |
| /3: Flour (Bread-ST) | 60,000 | 23 | 6,000 | 6.23 (20.9°C) | 0.28 |
| /4: Flour (Bread-CA) | 5,000 | <3 | 3,000 | 5.82 (20.7°C) | 0.26 |
| /5: Flour (Pasta-ST) | 8,000 | <3 | 5,000 | 6.13 (20.7°C) | 0.14 |
| /6: Flour (Pasta-CA) | 3,000 | <3 | 1,000 | 5.73 (20.5°C) | 0.20 |
| /7: Semolina (ST) | 6,000 | <3 | 1,000 | 5.93 (20.8°C) | 0.11 |
| /8: Semolina (CA) | 800 | <3 | 300 | 5.53 (20.7°C) | 0.15 |
| /9: Wheat (ST) | 40,000 | 23 | 2,000 | 6.55 (20.9°C) | 0.20 |
| /10: Wheat (CA) | 3,000 | <3 | 200 | 5.37 (20.6°C) | 0.25 |

### a) Microbiology

All flours exhibit a reduction in counts.

### b) pH

Reduction of pH due to treatment (about 0.5 points) is not significant.

### c) Acidity

The same as in the case of pH.

### Conclusion:

Treatment produces a reduction of microbiological counts without substantial modification of industrial milling flours acidity.

## Claims

1. A cleaning, discoloration and disinfection procedure for wheat grains and/or flours thereof, **characterized in that** said procedure comprises application to wheat grain, before, during or after milling thereof, according to the traditional sifting and grinding modes of each milling plant, and/or to flours thereof, of at least one adequate organic or food grade acid in mixture with the cleaning or wetting water thereof in a proportion of 2%-25% acid with respect to water to be employed.

2. A procedure according to claim 1, **characterized in that** it comprises the application on pre-milled wheat grain, according to the traditional sifting and grinding modes of each milling plant, of at least one adequate organic or food grade acid in mixture with the cleaning or wetting water thereof in a proportion of 2%-25% acid with respect to water to be employed.

3. A procedure according to claims 1 and 2, **characterized in that** it comprises application to wheat grain since its harvest, post-harvest, pre-ensilage, silage, post-ensilage, bagging, unbagging, drying, and/or transport, before entering thereof into the mill for milling thereof, of at least one organic or food grade acid mixed with cleaning or wetting water thererof in a proportion from 2-25% acid with respect to water to be used.

4. A procedure according to any of the preceding claims, **characterized in that** it comprises application onto said wheat grain, since its harvest, post-harvest, pre-ensilage, silage, post-ensilage, bagging, unbagging, drying, and/or transport, before entering thereof into the mill for milling thereof, of diluted food grade acetic acid known as "alcohol vinegar or white vinegar" mixed with cleaning or wetting water thereof in a proportion from 2-25% acid with respect to water to be used.

5. A procedure according to claim 1, **characterized in that** it comprises application onto said wheat grain, since its harvest, post-harvest, pre-ensilage, silage, post-ensilage, bagging, unbagging, drying, and/or transport before entering thereof into the mill for milling thereof, of diluted food grade acetic acid known as "alcohol vinegar or white vinegar" mixed with lactic acid and cleaning or wetting water thereof in a proportion from 2-25% acid with respect to water to be used.

6. A procedure according to claim 1, **characterized in that** it comprises application onto said wheat grain, since its harvest, post-harvest, pre-ensilage, silage, post-ensilage, bagging, unbagging, drying, and/or transport, before entering thereof into the mill for milling thereof, of lactic acid mixed with cleaning or wetting water thereof in a proportion from 2-25% acid with respect to water to be used.

7. A procedure according to claim 1, **characterized in that** it comprises application onto said wheat grain, since its harvest, post-harvest, pre-ensilage, silage, post-ensilage, bagging, unbagging, drying, and/or transport, before entering thereof into the mill for milling thereof, of diluted food grade acetic acid known as "alcohol vinegar or white vinegar" mixed with sodium or potassium metabisulfite and cleaning or wetting water thereof in a proportion from 2-25% acid with respect to water to be used.

8. A procedure according to claim 1, **characterized in that** it comprises application onto said wheat grain, since its harvest, post-harvest, pre-ensilage, silage, post-ensilage, bagging, unbagging, drying, and/or transport, before entering thereof into the mill for milling thereof, of diluted food grade acetic acid known as "alcohol vinegar or white vinegar" and lactic acid, jointly or independently, and combined with cleaning or wetting water thereof in a proportion from 2-25% acid with respect to water to be used.

9. A procedure according to claim 1, **characterized in that** it comprises application onto said wheat grain, before milling thereof according to the traditional sifting and grinding mode of each milling plant, of at least one adequate organic or food grade acid in mixture with cleaning or wetting water thereof in a proportion from 2-25% acid with respect to water to be used, causing bleaching of wheat grain hull.

10. A procedure according to claim 1, **characterized in that** it comprises application onto said wheat grain before milling thereof, according to the traditional sifting and grinding mode of each milling plant, of at least one adequate organic or food grade acid in mixture with cleaning or wetting water thereof in a proportion from 2-25% acid with respect to water to be used, causing bleaching of flour next to the wheat grain hull.

11. A procedure according to claim 1, **characterized in that** it comprises application onto said flour wheat grain, after milling thereof, by means of vapor, spraying or any other system of at least one adequate organic or food grade acid in mixture with cleaning or wetting water thereof in a proportion from 2-25% acid with respect to water to be used, causing bleaching of wheat flour.

12. A procedure according to claim 1, **characterized in that** it comprises application onto said wheat grain flour, after milling thereof, by means of vapor, spraying or any other system, of at least one adequate organic or food grade acid in mixture with cleaning or wetting water thereof in a proportion from 2-25% acid with respect to water to be used, causing bleaching of wheat flour and wheat hull for the elaboration of organic food.

13. A procedure according to claim 1, **characterized in that** it comprises application onto said wheat grain, before, during or after milling thereof, according to the traditional sifting and grinding mode of each milling plant, and/or to flours thereof, of at least one adequate organic or food grade acid and ordinary table salt in mixture with cleaning or wetting water thereof, wherein said table salt is present in a proportion comprised from 3% to 25%, preferably from 5% to 10% sodium, with respect to water to be used.

14. A procedure according to any of the preceding claims, **characterized in that** there are also applied malic and/or citric acid.
